(19) Europäisches Patentamt
European Patent Office
Office européen des brevets

(11) **EP 4 426 004 A1**

(12) **EUROPEAN PATENT APPLICATION**
published in accordance with Art. 153(4) EPC

(43) Date of publication:
**04.09.2024 Bulletin 2024/36**

(21) Application number: **22885605.0**

(22) Date of filing: **08.10.2022**

(51) International Patent Classification (IPC):
***H04W 28/06*** (2009.01)

(52) Cooperative Patent Classification (CPC):
**H04B 7/185; H04W 8/08; H04W 28/06**

(86) International application number:
**PCT/CN2022/123815**

(87) International publication number:
**WO 2023/071723 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.10.2021 CN 202111270181**

(71) Applicant: **Datang Mobile Communications
Equipment Co., Ltd.
Beijing 100085 (CN)**

(72) Inventor: **HOU, Liming
Beijing 100085 (CN)**

(74) Representative: **Maiwald GmbH
Engineering
Elisenhof
Elisenstrasse 3
80335 München (DE)**

(54) **LOCATION INFORMATION REPORTING METHOD AND RECEIVING METHOD, AND TERMINAL, SATELLITE AND STORAGE MEDIUM**

(57)    The present disclosure provides a location information reporting method, a location information reception method, a UE, a satellite and a storage medium. The location information reporting method includes: determining, by the UE, location information, and determining a target sub-region where the UE is located in accordance with the location information, the target sub-region being a sub-region within a satellite coverage range; and transmitting, by the UE, a preamble to a random beam of the satellite, the preamble being associated with the target sub-region.

```
┌─────────────────────────────────────────────────┐
│   determining, by a UE, location information, and │ ─── 301
│  determining a target sub-region where the UE is  │
│  located in accordance with the location information│
└─────────────────────────────────────────────────┘
                        │
                        ▼
┌─────────────────────────────────────────────────┐
│            transmitting, by the UE,              │ ─── 302
│      a preamble to a random beam of a satellite   │
└─────────────────────────────────────────────────┘
```

Fig. 3

EP 4 426 004 A1

## Description

## CROSS-REFERENCE TO RELATED APPLICATION

This application claims a priority of the Chinese patent application No.202111270181.6 filed on October 29, 2021, which is incorporated herein by reference in its entirety.

## TECHNICAL FIELD

The present disclosure relates to the field of communication technology, in particular to a location information reporting method, a location information reception method, a User Equipment (UE), a satellite, and a storage medium.

## BACKGROUND

In many communication scenarios, a UE needs to report location information to a network side, e.g., a base station or satellite. Usually, the UE reports the location information in an explicit manner through a dedicated message, i.e., the location information is reported by the UE through an additional message, so an overhead of the UE is relatively large.

## SUMMARY

An object of the present disclosure is to provide a location information reporting method, a location information reception method, a UE, a satellite and a storage medium, so as to solve the problem that the overhead of the UE is relatively large.

In one aspect, the present disclosure provides in some embodiments a location information reporting method, including: determining, by a UE, location information, and determining a target sub-region where the UE is located in accordance with the location information, the target sub-region being a sub-region within a satellite coverage range; and transmitting, by the UE, a preamble to a random beam of a satellite, the preamble being associated with the target sub-region.

In a possible embodiment of the present disclosure, the satellite coverage range includes a plurality of sub-regions, and each sub-region corresponds to one or more preambles.

In a possible embodiment of the present disclosure, the location information reporting method further includes dividing, by the UE, the satellite coverage range into a plurality of sub-regions.

In a possible embodiment of the present disclosure, the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

In a possible embodiment of the present disclosure, the plurality of sub-regions is arranged in a rectangular coverage range to cover the satellite coverage range; or the plurality of sub-regions is arranged in a cellular coverage range to cover the satellite coverage range.

In a possible embodiment of the present disclosure, the preamble is a preamble multiplexed by sub-regions in different directions of the random beam.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

In a possible embodiment of the present disclosure, the determining, by the UE, the location information includes determining, by the UE, the location information about the UE relative to the satellite in accordance with ephemeris information and positioning information.

In a possible embodiment of the present disclosure, the location information reporting method further includes receiving, by the UE, system information from the random beam of the satellite, and the system information includes at least one of a correspondence between preambles and sub-regions, ephemeris information, division rule information about the sub-regions, information about a size of each sub-region, information about a size of the satellite coverage range, or a sub-region division result.

In a possible embodiment of the present disclosure, the location information reporting method further includes: receiving, by the UE, response information from the random beam, the response information including information about a service beam; and performing, by the UE, network access on the service beam in accordance with the response information.

In another aspect, the present disclosure provides in some embodiments a location information reception method, including: receiving, by a satellite, a preamble from a UE through a random beam; and determining, by the satellite, a target sub-region associated with the preamble within a satellite coverage range in accordance with the preamble, the target sub-region being a sub-region where the UE is located.

In a possible embodiment of the present disclosure, the satellite coverage range includes a plurality of sub-regions, and each sub-region corresponds to one or more preambles.

In a possible embodiment of the present disclosure, the location information reception method further includes dividing, by the satellite, the satellite coverage range into the plurality of sub-regions.

In a possible embodiment of the present disclosure, the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

In a possible embodiment of the present disclosure, the plurality of sub-regions is arranged in a rectangular coverage range to cover the satellite coverage range; or the plurality of sub-regions is arranged in a cellular coverage range to cover the satellite coverage range.

In a possible embodiment of the present disclosure, the preamble is a preamble multiplexed by sub-regions in different directions of the random beam.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

In a possible embodiment of the present disclosure, the location information reception method further includes performing, by the satellite, validation on the preamble. In the case that a group of preambles corresponding to a current transmission direction of the random beam include the preamble, the validation is performed successfully; and in the case that the group of preambles corresponding to the current transmission direction of the random beam do not include the preamble, the validation is performed unsuccessfully.

In a possible embodiment of the present disclosure, the location information reception method further includes transmitting, by the satellite, system information to the UE through the random beam. The system information includes at least one of a correspondence between preambles and sub-regions, ephemeris information, division rule information about the sub-regions, information about a size of each sub-region, information about a size of the satellite coverage range, or a sub-region division result.

In a possible embodiment of the present disclosure, the location information reception method further includes: transmitting, by the satellite, response information to the UE through the random beam, the response information including information about a service beam; and invoking, by the satellite, the service beam to cover the target sub-region.

In yet another aspect, the present disclosure provides in some embodiments a UE, including a memory, a transceiver and a processor. The memory is configured to store therein a computer program, and the transceiver is configured to receive and transmit data under the control of the processor. The processor is configured to read the computer program in the memory so as to: determine location information, and determining a target sub-region where the UE is located in accordance with the location information, the target sub-region being a sub-region within a satellite coverage range; and transmit a preamble to a random beam of a satellite, the preamble being associated with the target sub-region.

In a possible embodiment of the present disclosure, the satellite coverage range includes a plurality of sub-regions, and each sub-region corresponds to one or more preambles.

In a possible embodiment of the present disclosure, the processor is further configured to divide the satellite coverage range into a plurality of sub-regions.

In a possible embodiment of the present disclosure, the preamble is a preamble multiplexed by sub-regions in different directions of the random beam.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

In a possible embodiment of the present disclosure, the processor is further configured to: receive response information from the random beam, the response information including information about a service beam; and perform network access on the service beam in accordance with the response information.

In still yet another aspect, the present disclosure provides in some embodiments a satellite, including a memory, a transceiver and a processor. The memory is configured to store therein a computer program, and the transceiver is configured to receive and transmit data under the control of the processor. The processor is configured to read the computer program in the memory so as to: receive a preamble from a UE through a random beam; and determine a target sub-region associated with the preamble within a satellite coverage range in accordance with the preamble, the target sub-region being a sub-region where the UE is located.

In a possible embodiment of the present disclosure, the satellite coverage range includes a plurality of sub-regions, and each sub-region corresponds to one or more preambles.

In a possible embodiment of the present disclosure, the satellite further includes dividing, by the satellite, the satellite coverage range into the plurality of sub-regions.

In a possible embodiment of the present disclosure, the preamble is a preamble multiplexed by sub-regions in different directions of the random beam.

In a possible embodiment of the present disclosure, the processor is further configured to perform validation on the preamble. In the case that a group of preambles corresponding to a current transmission direction of the random beam include the preamble, the validation is performed successfully; and in the case that the group of preambles corresponding to the current transmission direction of the random beam do not include the preamble, the validation is performed unsuccessfully.

In a possible embodiment of the present disclosure, the processor is further configured to: transmit response information to the UE through the random beam, the response information including information about a service beam; and invoke the service beam to cover the target sub-region.

In still yet another aspect, the present disclosure provides in some embodiments a UE, including: a determination unit configured to determine location information, and determine a target sub-region where the UE is located in accordance with the location information, the target sub-region being a sub-region within a satellite coverage range; and a transmission unit configured to transmit a preamble to a random beam of a satellite, the preamble being associated with the target sub-region.

In a possible embodiment of the present disclosure, the UE further includes: a first reception unit configured to receive response information from the random beam, the response information including information about a service beam; and an execution unit configured to perform network access on the service beam in accordance with the response information.

In still yet another aspect, the present disclosure provides in some embodiments a satellite, including: a reception unit configured to receive a preamble from a UE through a random beam; and a determination unit configured to determine a target sub-region associated with the preamble within a satellite coverage range in accordance with the preamble, the target sub-region being a sub-region where the UE is located.

In a possible embodiment of the present disclosure, the satellite further includes: a first transmission unit configured to transmit response information to the UE through the random beam, the response information including information about a service beam; and an invoking unit configured to invoke the service beam to cover the target sub-region.

In still yet another aspect, the present disclosure provides in some embodiments a processor-readable storage medium storing therein a computer program. The computer program is executed by a processor so as to implement the above-mentioned location information reporting method or location information reception method.

According to the embodiments of the present disclosure, the UE determines the location information, and determines the target sub-region where the UE is located in accordance with the location information, and the target sub-region is a sub-region within the satellite coverage range. Then, the UE transmits the preamble to the random beam of the satellite, and the preamble is associated with the target sub-region. As a result, the location information is reported through the preamble, without any necessity to introduce an additional message for reporting the location information, so it is able to reduce an overhead of the UE.

## BRIEF DESCRIPTION OF THE DRAWINGS

Fig. 1 is a schematic view showing applicable network architecture according to one embodiment of the present disclosure;

Fig. 2 is a schematic view showing coverage of beams of a satellite according to one embodiment of the present disclosure;

Fig. 3 is a flow chart of a location information reporting method according to one embodiment of the present disclosure;

Fig. 4 is a schematic view showing the division of sub-regions according to one embodiment of the present disclosure;

Fig. 5 is another schematic view showing the division of sub-regions according to one embodiment of the present disclosure;

Fig. 6 is a schematic view showing the division of regions for preamble multiplexing according to one embodiment of the present disclosure;

Fig. 7 is another schematic view showing the division of regions for preamble multiplexing according to one embodiment of the present disclosure;

Fig. 8 is a flow chart of a location information reception method according to one embodiment of the present disclosure;

Fig. 9 is a schematic view showing the location information reception method according to one embodiment of the present disclosure;

Fig. 10 is a schematic view showing the location information reporting method according to one embodiment of the present disclosure;

Fig. 11 is a schematic view showing a UE according to one embodiment of the present disclosure;

Fig. 12 is a schematic view showing a satellite according to one embodiment of the present disclosure;

Fig. 13 is another schematic view showing the UE according to one embodiment of the present disclosure; and

Fig. 14 is another schematic view showing the satellite according to one embodiment of the present disclosure.

## DETAILED DESCRIPTION

The present disclosure will be described hereinafter in conjunction with the drawings and embodiments.

The expression "and/or" involved in the embodiments of the present disclosure may be merely used to describe the relationship between objects, and it may include three relationships. For example, "A and/or B" may represent that, there is only A, there are both A and B, and there is only B. Further, the symbol "/" usually refers to "or".

The expression "a plurality of' refers to two or more, and the other quantifiers are similar.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

An object of the present disclosure is to provide a location information reporting method, a location information reception method, a UE, a satellite and a storage medium, so as to solve the problem that an overhead of the UE is relatively large.

The method and the device are provided on the basis of a same inventive concept, and a principle of the method for solving the problem is similar to that of the device, so the implementation of the device may refer to that of the method.

Schemes in the embodiments of the present disclosure may be applied to various systems, especially a 6th-Generation (6G) system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, 5th-Generation (5G) New Radio (NR) system, or 6G system. Each of these systems includes a terminal device and a network device. Each system further includes a core network part, e.g., an Evolved Packet System (EPS) or 5G system (5GS).

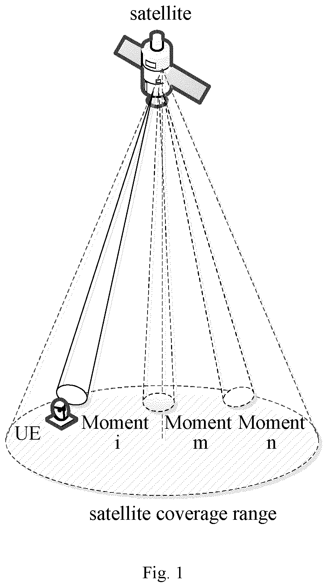

Fig. 1 shows applicable network architecture according to one embodiment of the present disclosure. As shown in Fig. 1, the network architecture includes a terminal and a satellite.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as UE. A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA), a Reduced Capability (Redcap) terminal, a smart appliance terminal, a vehicle-mounted terminal or a robot. In addition, the wireless terminal device may also be called as system, subscriber unit, subscriber station, mobile station, mobile, remote station, remote terminal, access terminal, user terminal, user agent or user device, which will not be particularly defined herein.

The satellite involved in the embodiments of the present disclosure is a satellite-borne base station (e.g., regenerative satellite). Of course, in some embodiments of the present disclosure, the satellite also includes satellite+base station (e.g., a transparent transponder satellite or satellite base station), i.e., the satellite has network functions of both the satellite and the base station. The base station includes a plurality of cells for providing services to UEs. Depending on different application scenarios, the base station is also called as an access point, a device in an access network in communication with the wireless terminal device through one or more sectors on an air interface, or any other name. The satellite is used to exchange a received air frame with an Internet Protocol (IP) packet, and it serves as a router between the wireless terminal device and the other part of the access network. The other part of the access network includes an IP communication network.

Multi Input Multi Output (MIMO) transmission is performed between the satellite and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be two-dimensional MIMO (2D-MIMO), three-dimensional MIMO (3D-MIMO), Full Dimension MIMO (FD-MIMO) or massive-MIMO, and it may also be diversity transmission, precoding transmission or beamforming transmission.

In the embodiments of the present disclosure, beams of a satellite hop in a time-division manner within a satellite coverage range on the basis of a certain rule, a spatial orientation to which the beam points changes after each hopping (a region served by each hopping is called as beam position), and a single-shot duration of the beam on each hopping orientation is called as residence time (the beam positions for beam hopping are accessed periodically or aperiodically). For example, as shown in Fig. 1, a beam hops in different orientations at moments i, m and n.

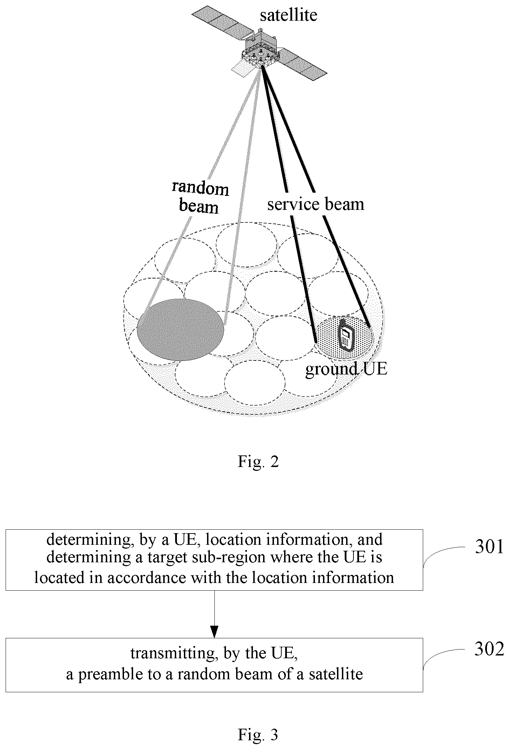

As shown in Fig. 2, in the embodiments of the present disclosure, hopping beams include random beams and service beams. The random beam is mainly used for auxiliary access of a random UE at an unknown position of a network side. The service beam is mainly used to for initial access of a UE at a known position of the network side as well as service transmission for the UE which has accessed a network. Generally, after downlink synchronization is achieved through the random beam, the random UE initiates an access request, and after the access request has been completed successfully, the network side schedules the service beam to cover the UE so as to complete the access.

As shown in Fig. 3, the present disclosure provides in some embodiments a location information reporting method, which includes: Step 301 of determining, by a UE, location information, and determining a target sub-region where the UE is located in accordance with the location information, the target sub-region being a sub-region within a satellite coverage range; and Step 302 of transmitting, by the UE, a preamble to a random beam of a satellite, the preamble being associated with the target sub-region.

The location information is determined by the UE in accordance with a Global Navigation Satellite System (GNSS), an ultrasonic positioning technology, a lase positioning technology, a Wireless Fidelity (WiFi) positioning technology, a Bluetooth positioning technology, or an ultra-wideband positioning technology.

The satellite coverage range includes a plurality of sub-regions. The satellite coverage range and the sub-regions within the satellite coverage range are determined in advance prior to Step 201. For example, the UE obtains relevant information about the satellite coverage range and the sub-regions within the satellite coverage range from a network side in advance, or calculates the sub-regions within the satellite coverage range in accordance with a predefined rule.

When the preamble is associated with the target sub-region, the UE and the satellite obtain an association relationship between the preambles and the sub-regions prior to Step 202. In this regard, the UE determines a corresponding preamble after determining the target sub-region, and reports the location information on the preamble; and the satellite determines the sub-region where the UE is currently located upon the receipt of the preamble.

In the embodiments of the present disclosure, on the basis of the above steps, the location information about the UE is reported through the preamble, without any necessity to introduce an additional message to report the location information, so it is able to reduce an overhead of the UE. In addition, when the location information about the UE is reported through the preamble, it is able to prevent an explicit leakage of position privacy of the UE in the initial access.

In a possible embodiment of the present disclosure, the satellite coverage range includes a plurality of sub-regions, and each sub-region corresponds to one or more preambles.

When each sub-region corresponds to one or more preambles, it means that there is a one-to-one, or one-to-many, mapping relationship between the sub-regions and the preambles. For example, one group of preambles correspond to a sub-region. A mapping rule or mapping result is configured by the network side for the UE in advance, or indicated by the network side to the UE through broadcasting information in the random beam.

In a possible embodiment of the present disclosure, the satellite coverage range is divided by the network side into the plurality of sub-regions in accordance with a predetermined rule, and then a division result is notified to the UE.

In a possible embodiment of the present disclosure, the method further includes dividing, by the UE, the satellite coverage range into a plurality of sub-regions.

A rule for dividing, by the UE, the satellite coverage range into a plurality of sub-regions is the same as that for dividing, by the network side, the satellite coverage range into a plurality of sub-regions, i.e., the plurality of sub-regions divided by the UE is the same as the plurality of sub-regions divided by the network side.

The division rule is preconfigured, or obtained by the UE through system information. For example, the division rule is obtained through a Master Information Block (MIB) or a System Information Block (SIB). The division rule includes such information as a rule of correspondence between the preambles and the substrates, a size of each sub-region, and satellite ephemeris.

In a possible embodiment of the present disclosure, after the EU has obtained the division rule, the following steps are performed. The UE receives downlink broadcasting information from the random beam so as to obtain ephemeris information, and calculates a position of the UE relative to a current satellite in accordance with the ephemeris information and GNSS position information. Next, the UE obtains information about a size of the satellite coverage range, a size of each sub-region and a division rule from downlink system information, and determines a satellite movement direction and a coordinate system for the division of the sub-regions in accordance with the information and the ephemeris information. Next, the UE divides the satellite coverage range into the sub-regions in accordance with the information and the coordinate system, so as to obtain the target sub-region where the UE is currently located. Then, the UE selects a corresponding preamble for access on the random beam in accordance with a correspondence between the sub-regions and the preambles in the system information.

In another possible embodiment of the present disclosure, the network side transmits a sub-region division scheme of a current satellite and a correspondence between the sub-regions and the preambles to the UE through an MIB or SIB in the random beam.

In a possible embodiment of the present disclosure, the method further includes receiving, by the UE, system information from the random beam of the satellite. The system information includes at least one of a correspondence between preambles and sub-regions, ephemeris information, division rule information about the sub-regions, information about a size of each sub-region, information about a size of the satellite coverage range, or a sub-region division result.

It should be appreciated that, in the embodiments of the present disclosure, at least one of the above information is also preconfigured for the UE.

In a possible embodiment of the present disclosure, the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

The satellite coverage range refers to a cone angle range of the satellite relative to a ground, and usually it is expressed in the form of $\pm 9$. Usually, the size of the service beam is expressed by an angle between beams (3dB angle), e.g., 3° or 5°, or expressed in the form of $\theta_s$. In this way, it is able to obtain the plurality of sub-regions in accordance with the size of the service beam.

When the satellite coverage range is divided into the plurality of sub-regions with $\theta_s/n$ as a reference, a size of each sub-region is $\theta_s/n$. In this way, it is able to improve the accuracy of relative position, thereby to increase a success rate when the sub-region is covered by the service beam at a first attempt.

In a possible embodiment of the present disclosure, the plurality of sub-regions is arranged in a rectangular coverage range to cover the satellite coverage range; or the plurality of sub-regions is arranged in a cellular coverage range to cover the satellite coverage range.

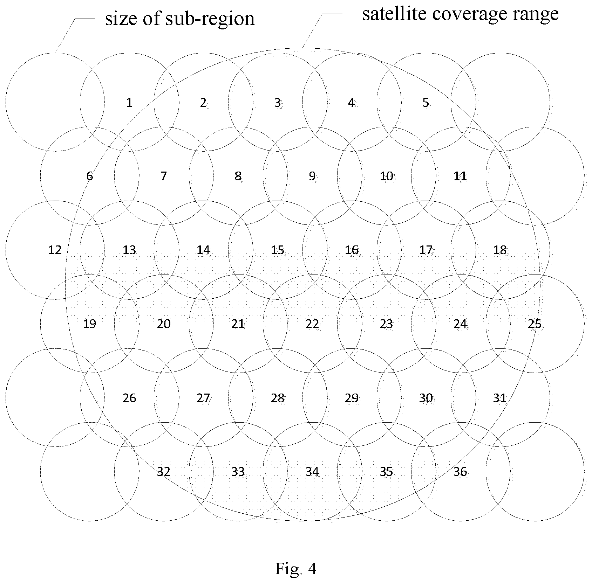

When the plurality of sub-regions is arranged in a rectangular coverage range to cover the satellite coverage range, the sub-regions are arranged in rows and columns within the satellite coverage range with a size of each sub-region as a reference, so as to form a rectangular region. For example, as shown in Fig. 4, a big circle in a dark color indicates the satellite coverage range, and each small circle indicates a sub-region. Depending on the rectangular arrangement mode in Fig. 4, the satellite coverage range is divided into 36 sub-regions. Taking a hexagon as a basic unit, an angle between beams corresponding to opposite angles of the hexagon is $\theta_c$, and an angle between beams corresponding to opposite sides of the hexagon is L=√3/2×θ, so the quantity of sub-regions divided on a diameter passing through a sub-satellite point within the satellite coverage range $\pm\theta$ is $\mathrm{Nsubcell}=\lceil 2\theta/\theta_L \rceil$, where $\Theta$ represents the satellite coverage range, and Nsubcell represents the quantity of sub-regions.

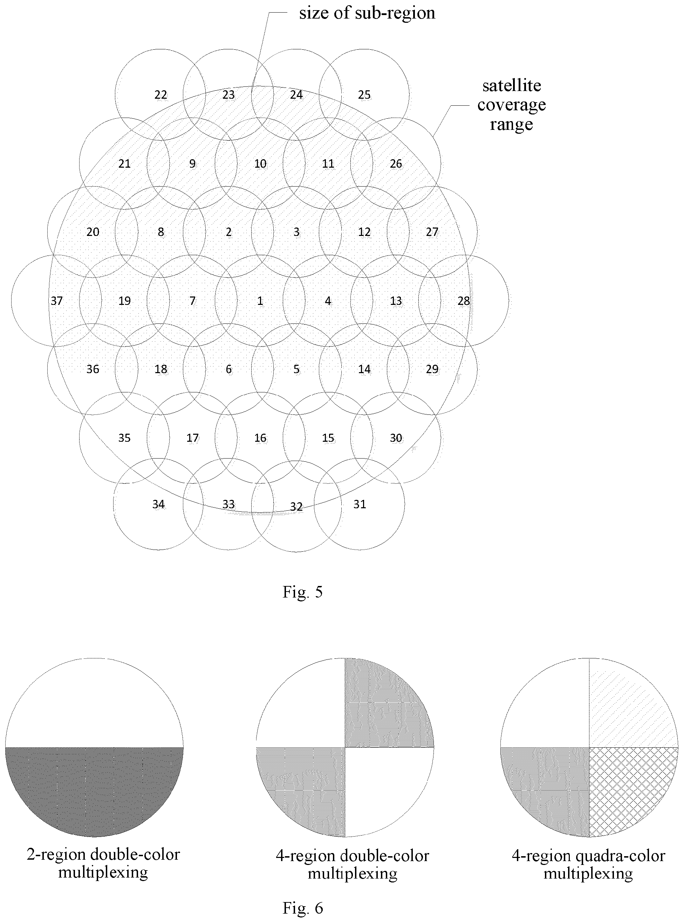

When the plurality of sub-regions is arranged in a cellular coverage range to cover the satellite coverage range, the cellular coverage range is formed with one sub-region as a center. For example, there is one sub-region at a center position, there are 6 sub-regions on a first ring, there are 12 sub-regions on a second ring, ..., and there are (n-1)*6 sub-regions on an $n^{\mathrm{th}}$ ring. For example, as shown in Fig. 5, the quantity of sub-regions in the cellular coverage mode is calculated through Ncell =

$$\mathrm{Nsubcell} + \sum_{k=1}^{(\mathrm{Nsubcell}-1)/2} 2(\mathrm{Nsubcell} - k)$$,

where Ncell represents the total quantity of sub-regions, and Nsubcell represents the quantity of sub-regions on a diameter passing through a sub-satellite point of the satellite.

It should be appreciated that, Figs. 4 and 5 merely illustratively show the sub-regions overlapping with each other in a division result. In some embodiments of the present disclosure, the sub-regions do not overlap with each other. For example, the sub-regions overlapping with each other are processed for a second time, so as to strictly define a boundary of each sub-region and prevent the sub-regions from overlapping with each other. At this time, each sub-region corresponds to a separate preamble.

In a possible embodiment of the present disclosure, in the case that the UE is located in an overlapping region of a plurality of sub-regions, the target sub-region is determined by the UE as follows.

In the case that the UE is located in an overlapping region of two sub-regions, a sub-region at a position opposite to a satellite movement direction is selected as the target region. When a dividing line of the two sub-regions extends in a same direction as the satellite movement direction, a sub-region whose edge is located furthest from the UE is selected as the target sub-region. In the above-mentioned case, when the UE is located on the dividing line of the two sub-regions, one of the two sub-regions is randomly selected by the UE as the target sub-region.

In the case that the UE is located in an overlapping region of three sub-regions, a sub-region at a position opposite to the satellite movement direction is selected as the target region. When a dividing line of two sub-regions of the three sub-regions extends in a same direction as the satellite movement direction and these two sub-regions are both located at positions opposite to the satellite movement direction, a sub-region of the two sub-regions whose edge is located furthest from the UE is selected as the target sub-region. In the above-mentioned case, when the UE is located on the dividing line of the two sub-regions, one of the two sub-regions is randomly selected by the UE as the target sub-region.

When the sub-regions are obtained in accordance with the size of the service beam, through the above-mentioned two ways, it is able to select an appropriate target sub-region and the preamble for the UE which is located in an overlapping region. When the sub-regions are obtained in accordance with a size which is far smaller than the size of the service beam, through the above-mentioned two ways, it is also able to select an appropriate target sub-region and the preamble for the UE which is located in an overlapping region. In addition, in this case, each sub-region has an area much smaller than a coverage range of the service beam, so one service beam covers a plurality of sub-regions. Hence, the UE in the overlapping region of the sub-regions may also randomly select one of the sub-regions as the target sub-region.

In a possible embodiment of the present disclosure, the preamble is a preamble multiplexed by sub-regions in different directions of the random beam.

When the preamble is multiplexed by the sub-regions in different directions of the random beam, it means that a same preamble is multiplexed in different directions of the random beam, so as to achieve spatial-division multiplexing of the preamble. The direction of the random beam is identified though the directivity of the hopping random beam.

During the implementation, the UE determines a reception direction of the random beam, and look up a preamble corresponding to the target sub-region in a direction mapping table. The preamble is multiplexed in a spatial-division manner, so it is able to save preamble resources.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

The plurality of regions includes regions covered by the random beam in a plurality of directions.

During the implementation, one group of preambles correspond to a plurality of regions, so as to save the preamble resources.

In a possible embodiment of the present disclosure, on the basis of the rectangular arrangement of the sub-regions, each sub-region is equally divided with the sub-satellite point of the satellite, e.g., halved, or equally divided into four parts or eight parts. In other words, a circle formed through mapping the satellite coverage range onto a plane is equally divided for N times, so as to form a plurality of sectors as shown in Fig. 6, where N is an integer greater than 1.

In this regard, the coverage region is divide into N regions with the sub-satellite point of the satellite as a center, a plurality of groups of preambles is multiplexed in the N regions, and a same group of preambles are used in different directions, so as to prevent the mutual interference. Each preamble in the group uniquely indicate a certain sub-region in the direction.

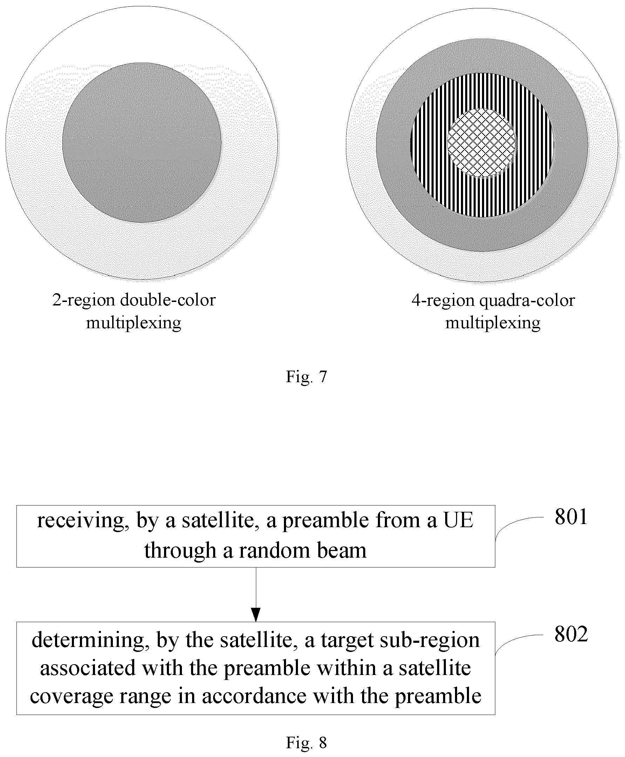

In another possible embodiment of the present disclosure, circles with different radiuses are formed with the sub-satellite point as a center, so as to obtain a plurality of ring-like regions as shown in Fig. 7. Different preambles are configured for adjacent ring-like regions, and a preamble corresponds to one sub-region in each ring-like region.

In a possible embodiment of the present disclosure, the determining, by the UE, the location information includes determining, by the UE, the location information about the UE relative to the satellite in accordance with ephemeris information and positioning information.

The positioning information is obtained through a GNSS positioning technology, an ultrasonic positioning technology, a laser positioning technology, a WiFi positioning technology, a Bluetooth positioning technology or an ultra-wideband positioning technology. When the location information about the UE relative to the satellite is determined in accordance with ephemeris information and positioning information, the location information about the UE relative to the satellite is inquired in accordance with the ephemeris information.

During the implementation, the location information is location information about the UE relative to the satellite, so it is able for the satellite to use the location information more conveniently, thereby to reduce the complexity.

It should be appreciated that, the location information about the UE relative to the satellite is not particularly defined in the embodiments of the present disclosure. For example, the satellite coverage range is converted into GNSS location information, and then the target sub-region where the UE is located is directly determined in accordance with the GNSS location information.

In a possible embodiment of the present disclosure, the method further includes: receiving, by the UE, response information from the random beam, the response information including information about a service beam; and performing, by the UE, network access on the service beam in accordance with the response information.

The response information is Random Access Response (RAR), and the information about the service beam is indication information for indicating a beam service.

During the implementation, it is able for the UE to initiate the preamble to the random beam and access a network through the service beam, thereby to improve the network access reliability. For example, in some scenarios, the size of the service beam is smaller than the size of the random beam. In this way, the target sub-region where the UE is located is determined through the preamble, so the network side invokes the service beam to provide services for the UE within the target sub-region, so as to enable the UE to access the network. To be specific, the satellite coverage range is divided into a plurality of sub-regions, and a preamble or a group of preambles are mapped to each sub-region. Upon the receipt of the preamble, the satellite looks up a position of a satellite sub-region corresponding to the preamble, and then schedules the service beam to cover the corresponding sub-region so as to provide services for a user.

According to the embodiments of the present disclosure, the UE determines the location information, and determines the target sub-region where the UE is located in accordance with the location information, and the target sub-region is a sub-region within the satellite coverage range. Then, the UE transmits the preamble to the random beam of the satellite, and the preamble is associated with the target sub-region. As a result, the location information is reported through the preamble, without any necessity to introduce an additional message for reporting the location information, so it is able to reduce an overhead of the UE.

As shown in Fig. 8, the present disclosure further provides in some embodiments a location information reception method, which includes: Step 801 of receiving, by a satellite, a preamble from a UE through a random beam; and Step 802 of determining, by the satellite, a target sub-region associated with the preamble within a satellite coverage range in accordance with the preamble, the target sub-region being a sub-region where the UE is located.

In a possible embodiment of the present disclosure, the satellite coverage range includes a plurality of sub-regions, and each sub-region corresponds to one or more preambles.

In a possible embodiment of the present disclosure, the location information reception method further includes dividing, by the satellite, the satellite coverage range into the plurality of sub-regions.

In a possible embodiment of the present disclosure, the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

In a possible embodiment of the present disclosure, the plurality of sub-regions is arranged in a rectangular coverage range to cover the satellite coverage range; or the plurality of sub-regions is arranged in a cellular coverage range to cover the satellite coverage range.

In a possible embodiment of the present disclosure, the preamble is a preamble multiplexed by sub-regions in different directions of the random beam.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

In a possible embodiment of the present disclosure, the location information reception method further includes performing, by the satellite, validation on the preamble. In the case that a group of preambles corresponding to a current transmission direction of the random beam include the preamble, the validation is performed successfully; and in the case that the group of preambles corresponding to the current transmission direction of the random beam do not include the preamble, the validation is performed unsuccessfully.

When the validation is performed successfully, the satellite uses the location information about the UE, so as to invoke the service beam to provide services for the UE. When the validation is performed unsuccessfully, the satellite discards the location information about the UE, and does not invoke the service beam to provide services for the UE.

In a possible embodiment of the present disclosure, the location information reception method further includes transmitting, by the satellite, system information to the UE through the random beam. The system information includes at least one of a correspondence between preambles and sub-regions, ephemeris information, division rule information about the sub-regions, information about a size of each sub-region, information about a size of the satellite coverage range, or a sub-region division result.

In a possible embodiment of the present disclosure, the location information reception method further includes: transmitting, by the satellite, response information to the UE through the random beam, the response information including information about a service beam; and invoking, by the satellite, the service beam to cover the target sub-region.

It should be appreciated that, the implementation of the location information reception method in the embodiments of the present disclosure may refer to that of the location information reporting method in Fig. 3 with a same technical effect, and thus will not be particularly defined herein.

The method in the embodiments of the present disclosure will be illustratively described hereinafter in conjunction with embodiments.

First Embodiment

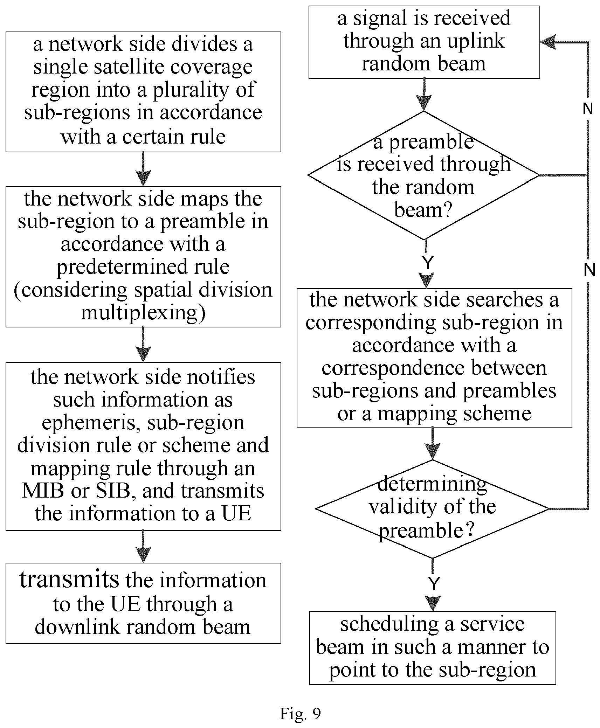

In this embodiment, a network side (i.e., a satellite side) is taken as an example. As shown in Fig. 9, the method includes the following steps.

The network side divides the satellite coverage range into a plurality of sub-regions in accordance with an agreed size (e.g., a size of a service beam), and maps the preambles to the sub-regions in accordance with an agreed spatial-division multiplexing rule.

Next, the network side notifies the UE of ephemeris information, beam information, a mapping rule, a sub-region division rule or a division result through an MIB or SIB in the random beam.

Next, upon the receipt of the preamble through the uplink random beam, the network side determines a sub-region within which the preamble is transmitted (for a preamble received in a certain direction, when the preamble does not exist in an agreed direction, the network side determines that there is a false detection alarm of the preamble, so as to prevent a waste of resources caused when the service beam is scheduled).

Then, the network side schedules the service beam to cover the sub-region.

Second Embodiment

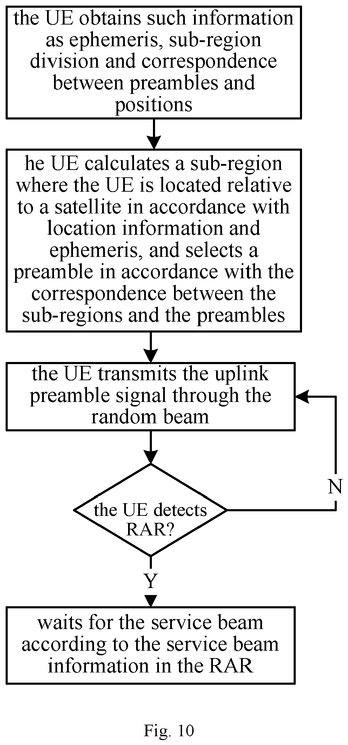

In this embodiment, a UE side is taken as an example. As shown in Fig. 10, the method includes the following steps.

The UE obtains such information as satellite ephemeris, a sub-region division rule or scheme and a correspondence between the sub-regions and preambles from the random beam, and estimates a sub-region of a current satellite within which the UE is located in accordance with the information and GNSS location information about the UE.

Next, the UE selects a corresponding preamble in accordance with the estimated relative location information, and transmits it on the random beam.

Next, the UE waits to receive an RAR (including information about the service beam) from the random beam.

Then, the UE waits to receive the downlink service beam in accordance with the RAR, and completes the access to the network on the service beam.

In the embodiments of the present disclosure, the satellite coverage range is divided into a plurality of sub-regions, a preamble is mapped to each sub-region, and a same group of preambles are multiplexed by the sub-regions in different directions. After a random user initiates a preamble access on the random beam, the network side determines a region to which the preamble belongs in accordance with a reception direction of the random beam, estimates a position of a corresponding sub-region in accordance with a preamble detection result, and schedules the service beam to cover the corresponding sub-region to provide services for a user. In this regard, it is able to prevent any additional overhead and delay caused when the location information about the UE is reported on the random beam, so the method is adapted to a system including the random beams and service beams with different sizes.

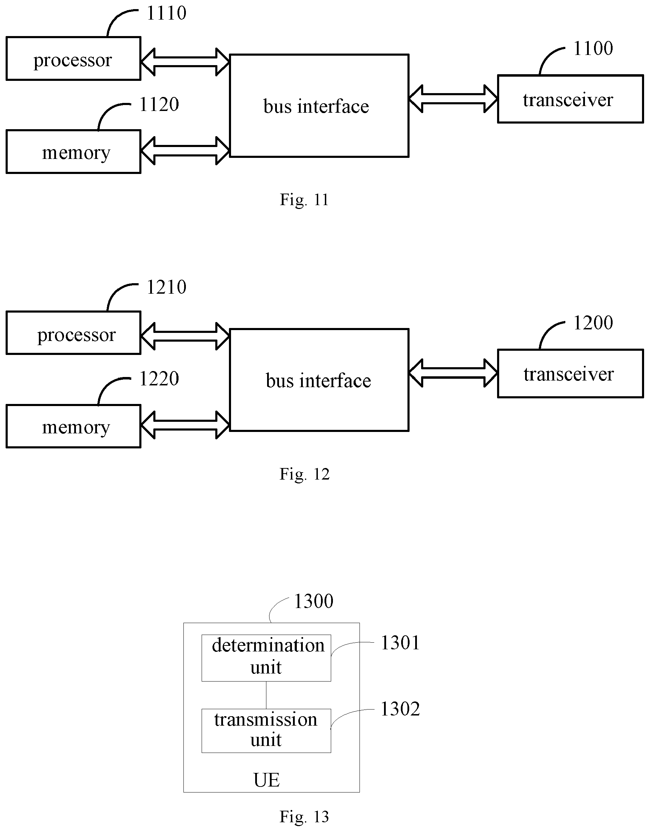

As shown in Fig. 11, the present disclosure further provides in some embodiments a UE, which includes a memory 1120, a transceiver 1100 and a processor 1110. The memory 1120 is configured to store therein a computer program, and the transceiver 1100 is configured to receive and transmit data under the control of the processor 1110. The processor 1110 is configured to read the computer program in the memory 1120 so as to: determine location information, and determining a target sub-region where the UE is located in accordance with the location information, the target sub-region being a sub-region within a satellite coverage range; and transmit a preamble to a random beam of a satellite, the preamble being associated with the target sub-region.

In Fig. 11, bus architecture may include a number of buses and bridges connected to each other, so as to connect various circuits for one or more processors 1110 and one or more memories 1120. In addition, as is known in the art, the bus architecture may be used to connect any other circuits, such as a circuit for a peripheral device, a circuit for a voltage stabilizer and a power management circuit. A bus interface may be provided, and the transceiver 1100 may consist of a plurality of elements, i.e., a transmitter and a receiver for communication with any other devices over a transmission medium. The transmission medium includes a wireless channel, a wired channel, or an optical cable. With respect to different UEs, a user interface 1130 may also be provided for devices which are to be arranged inside or outside the UE, and these devices may include but not limited to a keypad, a display, a speaker, a microphone and a joystick.

The processor 1110 may take charge of managing the bus architecture as well as general processings. The memory 1120 may store therein data for the operation of the processor 1110.

In a possible embodiment of the present disclosure, the processor 1110 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor is configured to call the computer program in the memory, so as to implement the above-mentioned method in accordance with obtained executable instructions. The processor may also be physically separated from the memory.

In a possible embodiment of the present disclosure, the satellite coverage range includes a plurality of sub-regions, and each sub-region corresponds to one or more preambles.

In a possible embodiment of the present disclosure, the processor 1110 is further configured to divide the satellite coverage range into a plurality of sub-regions.

In a possible embodiment of the present disclosure, the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

In a possible embodiment of the present disclosure, the plurality of sub-regions is arranged in a rectangular coverage range to cover the satellite coverage range; or the plurality of sub-regions is arranged in a cellular coverage range to cover the satellite coverage range.

In a possible embodiment of the present disclosure, the preamble is a preamble multiplexed by sub-regions in different directions of the random beam.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

In a possible embodiment of the present disclosure, the determining the location information includes determining the location information about the UE relative to the satellite in accordance with ephemeris information and positioning information.

In a possible embodiment of the present disclosure, the processor 1110 is further configured to receive system information from the random beam of the satellite, and the system information includes at least one of a correspondence between preambles and sub-regions, ephemeris information, division rule information about the sub-regions, information about a size of each sub-region, information about a size of the satellite coverage range, or a sub-region division result.

In a possible embodiment of the present disclosure, the processor 1110 is further configured to: receive response information from the random beam, the response information including information about a service beam; and perform network access on the service beam in accordance with the response information.

It should be appreciated that, the UE in the embodiments of the present disclosure is used to implement the steps of the above-mentioned method with a same technical effect, which will not be particularly defined herein.

As shown in Fig. 12, the present disclosure further provides in some embodiments a satellite, which includes a memory 1220, a transceiver 1200 and a processor 1210. The memory 1220 is configured to store therein a computer program, and the transceiver 1200 is configured to receive and transmit data under the control of the processor 1210. The processor 1210 is configured to read the computer program in the memory 1220 so as to: receive a preamble from a UE through a random beam; and determine a target sub-region associated with the preamble within a satellite coverage range in accordance with the preamble, the target sub-region being a sub-region where the UE is located.

In Fig. 12, bus architecture may include a number of buses and bridges connected to each other, so as to connect various circuits for one or more processors 1210 and one or more memories 1220. In addition, as is known in the art, the bus architecture may be used to connect any other circuits, such as a circuit for a peripheral device, a circuit for a voltage stabilizer and a power management circuit. A bus interface may be provided, and the transceiver 1200 may consist of a plurality of elements, i.e., a transmitter and a receiver for communication with any other devices over a transmission medium. The transmission medium includes a wireless channel, a wired channel, or an optical cable. With respect to different UEs, a user interface 1230 may also be provided for devices which are to be arranged inside or outside the UE, and these devices may include but not limited to a keypad, a display, a speaker, a microphone and a joystick.

The processor 1210 may take charge of managing the bus architecture as well as general processings. The memory 1220 may store therein data for the operation of the processor 1210.

In a possible embodiment of the present disclosure, the processor 1210 is a CPU, an ASIC, an FPGA or a CPLD. The processor may also use multi-core architecture.

The processor is configured to call the computer program in the memory, so as to implement the above-mentioned method in accordance with obtained executable instructions. The processor may also be physically separated from the memory.

In a possible embodiment of the present disclosure, the satellite coverage range includes a plurality of sub-regions, and each sub-region corresponds to one or more preambles.

In a possible embodiment of the present disclosure, the processor 1210 is further configured to divide the satellite coverage range into the plurality of sub-regions.

In a possible embodiment of the present disclosure, the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

In a possible embodiment of the present disclosure, the plurality of sub-regions is arranged in a rectangular coverage range to cover the satellite coverage range; or the plurality of sub-regions is arranged in a cellular coverage range to cover the satellite coverage range.

In a possible embodiment of the present disclosure, the preamble is a preamble multiplexed by sub-regions in different directions of the random beam.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

In a possible embodiment of the present disclosure, the processor 1210 is further configured to perform validation on the preamble. In the case that a group of preambles corresponding to a current transmission direction of the random beam include the preamble, the validation is performed successfully; and in the case that the group of preambles corresponding to the current transmission direction of the random beam do not include the preamble, the validation is performed unsuccessfully.

In a possible embodiment of the present disclosure, the processor 1210 is further configured to transmit system information to the UE through the random beam. The system information includes at least one of a correspondence between preambles and sub-regions, ephemeris information, division rule information about the sub-regions, information about a size of each sub-region, information about a size of the satellite coverage range, or a sub-region division result.

In a possible embodiment of the present disclosure, the location information reception method further includes: transmitting, by the satellite, response information to the UE through the random beam, the response information including information about a service beam; and invoking, by the satellite, the service beam to cover the target sub-region.

It should be appreciated that, the satellite in the embodiments of the present disclosure is used to implement the steps of the above-mentioned method with a same technical effect, which will not be particularly defined herein.

As shown in Fig. 13, the present disclosure further provides in some embodiments a UE 1300, which includes: a determination unit 1301 configured to determine location information, and determining a target sub-region where the UE is located in accordance with the location information, the target sub-region being a sub-region within a satellite coverage range; and a transmission unit 1302 configured to transmit a preamble to a random beam of a satellite, the preamble being associated with the target sub-region.

In a possible embodiment of the present disclosure, the UE further includes: a first reception unit configured to receive response information from the random beam, the response information including information about a service beam; and an execution unit configured to perform network access on the service beam in accordance with the response information.

In a possible embodiment of the present disclosure, the satellite coverage range includes a plurality of sub-regions, and each sub-region corresponds to one or more preambles.

In a possible embodiment of the present disclosure, the UE further includes a division unit configured to divide the satellite coverage range into a plurality of sub-regions.

In a possible embodiment of the present disclosure, the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

In a possible embodiment of the present disclosure, the plurality of sub-regions is arranged in a rectangular coverage range to cover the satellite coverage range; or the plurality of sub-regions is arranged in a cellular coverage range to cover the satellite coverage range.

In a possible embodiment of the present disclosure, the preamble is a preamble multiplexed by sub-regions in different directions of the random beam.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

In a possible embodiment of the present disclosure, the determination unit 1301 is configured to determine the location information about the UE relative to the satellite in accordance with ephemeris information and positioning information.

In a possible embodiment of the present disclosure, the UE further includes a second reception unit configured to receive system information from the random beam of the satellite, and the system information includes at least one of a correspondence between preambles and sub-regions, ephemeris information, division rule information about the sub-regions, information about a size of each sub-region, information about a size of the satellite coverage range, or a sub-region division result.

It should be appreciated that, the UE in the embodiments of the present disclosure is used to implement the steps of the above-mentioned method with a same technical effect, which will not be particularly defined herein.

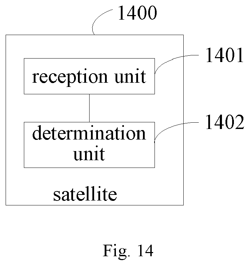

As shown in Fig. 14, the present disclosure further provides in some embodiments a satellite 1400, which includes: a reception unit 1401 configured to receive a preamble from a UE through a random beam; and a determination unit 1402 configured to determine a target sub-region associated with the preamble within a satellite coverage range in accordance with the preamble, the target sub-region being a sub-region where the UE is located.

In a possible embodiment of the present disclosure, the satellite further includes: a first transmission unit configured to transit response information to the UE through the random beam, the response information including information about a service beam; and an invoking unit configured to invoke the service beam to cover the target sub-region.

In a possible embodiment of the present disclosure, the satellite coverage range includes a plurality of sub-regions, and each sub-region corresponds to one or more preambles.

In a possible embodiment of the present disclosure, the satellite further includes a division unit configured to divide the satellite coverage range into the plurality of sub-regions.

In a possible embodiment of the present disclosure, the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

In a possible embodiment of the present disclosure, the plurality of sub-regions is arranged in a rectangular coverage range to cover the satellite coverage range; or the plurality of sub-regions is arranged in a cellular coverage range to cover the satellite coverage range.

In a possible embodiment of the present disclosure, the preamble is a preamble multiplexed by subregions in different directions of the random beam.

In a possible embodiment of the present disclosure, the random beam corresponds to a plurality of directions, a plurality of regions corresponding to the plurality of directions corresponds to a same group of preambles, and in any region of the plurality of regions, different preambles in the same group of preambles are associated with different sub-regions.

In a possible embodiment of the present disclosure, the satellite further includes a validation unit configured to perform validation on the preamble. In the case that a group of preambles corresponding to a current transmission direction of the random beam include the preamble, the validation is performed successfully; and in the case that the group of preambles corresponding to the current transmission direction of the random beam do not include the preamble, the validation is performed unsuccessfully.

In a possible embodiment of the present disclosure, the satellite further includes a second transmission unit configured to transmit system information to the UE through the random beam. The system information includes at least one of a correspondence between preambles and sub-regions, ephemeris information, division rule information about the sub-regions, information about a size of each sub-region, information about a size of the satellite coverage range, or a sub-region division result.

It should be appreciated that, the satellite in the embodiments of the present disclosure is used to implement the steps of the above-mentioned method with a same technical effect, which will not be particularly defined herein.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The present disclosure further provides in some embodiments a processor-readable storage medium storing therein a computer program. The computer program is executed by a processor, so as to implement the above-mentioned location information reporting method or location information reception method.

The processor-readable storage medium is any available medium or data storage device capable of being accessed by the processor, which includes, but not limited to, a magnetic memory (e.g., floppy disk, hard disk, magnetic tape, or Magnetic Optical disk (MO)), an optical memory (e.g., Compact Disk (CD), Digital Versatile Disk (DVD), Blue-ray Disk (BD), or High-definition Versatile Disk (HVD)), or a semiconductor memory (e.g., Read-Only Memory (ROM), Electrically Programmable ROM (EPROM), Electrically Erasable PROM (EEPROM), NAND flash, or Solid-State Disk or Solid State Drive (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

**Claims**

1. A location information reporting method, comprising:

   determining, by a User Equipment (UE), location information, and determining a target sub-region where the UE is located in accordance with the location information, the target sub-region being a sub-region within a satellite coverage range; and
   transmitting, by the UE, a preamble to a random beam of a satellite, the preamble being associated with the target sub-region.

2. The location information reporting method according to claim 1, wherein the satellite coverage range comprises a plurality of sub-regions, and each sub-region corresponds to one or more preambles.

3. The location information reporting method according to claim 2, further comprising dividing, by the UE, the satellite coverage range into a plurality of sub-regions.

4. The location information reporting method according to claim 2 or 3, wherein the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

5. The location information reporting method according to claim 2 or 3, wherein the plurality of sub-regions is arranged in a rectangular coverage range to cover the satellite coverage range; or the plurality of sub-regions is arranged in a cellular coverage range to cover the satellite coverage range.

6. The location information reporting method according to claim 1, wherein the preamble is a preamble multiplexed by sub-regions in different directions of the random beam.

7. The location information reporting method according to claim 6, wherein the random beam corresponds to a plurality of directions, a plurality of regions corresponding to the plurality of directions corresponds to a same group of preambles, and in any region of the plurality of regions, different preambles in the same group of preambles are associated with different sub-regions.

8. The location information reporting method according to claim 1, wherein the determining, by the UE, the location information comprises determining, by the UE, the location information about the UE relative to the satellite in accordance with ephemeris information and positioning information;

9. The location information reporting method according to any one of claims 1, 2, 3, 6, 7 or 8, further comprises receiving, by the UE, system information from the random beam of the satellite, wherein the system information comprises at least one of a correspondence between preambles and sub-regions, ephemeris information, division rule information about the sub-regions, information about a size of each sub-region, information about a size of the satellite coverage range, or a sub-region division result.

10. The location information reporting method according to any one of claims 1, 2, 3, 6, 7 or 8, further comprising:

   receiving, by the UE, response information from the random beam, the response information comprising information about a service beam; and
   performing, by the UE, network access on the service beam in accordance with the response information.

11. A location information reception method, comprising:

   receiving, by a satellite, a preamble from a User Equipment (UE) through a random beam; and
   determining, by the satellite, a target sub-region associated with the preamble within a satellite coverage range in accordance with the preamble, the target sub-region being a sub-region where the UE is located.

12. The location information reception method according to claim 11, wherein the satellite coverage range comprises a plurality of sub-regions, and each sub-region corresponds to one or more preambles.

13. The location information reception method according to claim 12, further comprising dividing, by the satellite, the satellite coverage range into the plurality of sub-regions.

14. The location information reception method according to claim 12 or 13, wherein the satellite coverage range is divided into the plurality of sub-regions with a size of a service beam as a reference; or the satellite coverage range is divided into the plurality of sub-regions with $\theta_s/n$ as a reference, where $\theta_s$ represents an angle between service beams, and n is an integer greater than 1.

15. The location information reception method according to claim 12 or 13, wherein the plurality of sub-regions is arranged in a rectangular coverage range to cover the satellite coverage range; or the plurality of sub-regions is arranged in a cellular coverage range to cover the satellite coverage range.

16. The location information reception method according to claim 11, wherein the preamble is a preamble multiplexed by sub-regions in different directions of the random beam.

17. The location information reception method according to claim 16, wherein the random beam corresponds to a plurality of directions, a plurality of regions corresponding to the plurality of directions corresponds to a same group of preambles, and in any region of the plurality of regions, different preambles in the same group of preambles are associated with different sub-regions.

18. The location information reception method according to claim 16, further comprising performing, by the satellite, validation on the preamble, wherein in the case that a group of preambles corresponding to a current transmission direction of the random beam comprise the preamble, the validation is performed successfully; and in the case that the group of preambles corresponding to the current transmission direction of the random beam do not comprise the preamble, the validation is performed unsuccessfully.

19. The location information reception method according to any one of claims 11, 12, 13, 16, 17 or 18, further comprising transmitting, by the satellite, system information to the UE through the random beam, wherein the system information comprises at least one of a correspondence between preambles and sub-regions, ephemeris information, division rule information about the sub-regions, information about a size of each sub-region, information about a size of the satellite coverage range, or a sub-region division result.

20. The location information reception method according to any one of claims 11, 12, 13, 16, 17 or 18, further comprising:

transmitting, by the satellite, response information to the UE through the random beam, the response information comprising information about a service beam; and

invoking, by the satellite, the service beam to cover the target sub-region.

21. A User Equipment (UE), comprising a memory, a transceiver and a processor, wherein the memory is configured to store therein a computer program, and the transceiver is configured to receive and transmit data under the control of the processor, wherein the processor is configured to read the computer program in the memory so as to:

determine location information, and determining a target sub-region where the UE is located in accordance with the location information, the target sub-region being a sub-region within a satellite coverage range; and

transmit a preamble to a random beam of a satellite, the preamble being associated with the target sub-region.

22. The UE according to claim 21, wherein the satellite coverage range comprises a plurality of sub-regions, and each sub-region corresponds to one or more preambles.

23. The UE according to claim 22, wherein the processor is further configured to divide the satellite coverage range into a plurality of sub-regions.

24. The UE according to claim 21, wherein the preamble is a preamble multiplexed by sub-regions in different directions of the random beam.

25. The UE according to claim 24, wherein the random beam corresponds to a plurality of directions, a plurality of regions corresponding to the plurality of directions corresponds to a same group of preambles, and in any region of the plurality of regions, different preambles in the same group of preambles are associated with different sub-regions.

26. The UE according to any one of claims 21, 22, 23, 24 or 25, wherein the processor is further configured to:

receive response information from the random beam, the response information comprising information about a service beam; and

perform network access on the service beam in accordance with the response information.

27. A satellite, comprising a memory, a transceiver and a processor, wherein the memory is configured to store therein a computer program, and the transceiver is configured to receive and transmit data under the control of the processor, wherein the processor is configured to read the computer program in the memory so as to:

receive a preamble from a User Equipment (UE) through a random beam; and

determine a target sub-region associated with the preamble within a satellite coverage range in accordance with the preamble, the target sub-region being a sub-region where the UE is located.

28. The satellite according to claim 27, wherein the satellite coverage range comprises a plurality of sub-regions, and each sub-region corresponds to one or more preambles.

29. The satellite according to claim 28, further comprising dividing, by the satellite, the satellite coverage range into the plurality of sub-regions.

30. The satellite according to claim 27, wherein the preamble is a preamble multiplexed by sub-regions in different directions of the random beam.

31. The satellite according to claim 30, wherein the processor is further configured to perform validation on the preamble, wherein in the case that a group of preambles corresponding to a current transmission direction of the random beam comprise the preamble, the validation is performed successfully; and in the case that the group of preambles corresponding to the current transmission direction of the random beam do not comprise the preamble, the validation is performed unsuccessfully.

32. The satellite according to any one of claims 27, 28, 29, 30 or 31, wherein the processor is further configured to:

transmit response information to the UE through the random beam, the response information comprising information about a service beam; and

invoke the service beam to cover the target sub-region.

33. A User Equipment (UE), comprising:

a determination unit configured to determine location information, and determine a target sub-region where the UE is located in accordance with the location information, the target sub-region being a sub-region within a satellite coverage range; and

a transmission unit configured to transmit a preamble to a random beam of a satellite, the preamble being associated with the target sub-region.

34. The UE according to claim 33, further comprising:

a first reception unit configured to receive response information from the random beam, the response information comprising information about a service beam; and

an execution unit configured to perform network access on the service beam in accordance with the response information.

35. A satellite, comprising:

a reception unit configured to receive a preamble from a User Equipment (UE) through a random beam; and

a determination unit configured to determine a target sub-region associated with the preamble within a satellite coverage range in accordance with the preamble, the target sub-region being a sub-region where the UE is located.

36. The satellite according to claim 35, further comprising:

a first transmission unit configured to transmit response information to the UE through the random beam, the response information comprising information about a service beam; and

an invoking unit configured to invoke the service beam to cover the target sub-region.

37. A processor-readable storage medium storing therein a computer program, wherein the computer program is executed by a processor so as to implement the location information reporting method according to any one of claims 1 to 10, or implement the location information reception method according to any one of claims 11 to 20.

satellite

UE  Moment  Moment  Moment
        i         m        n

satellite coverage range

Fig. 1

satellite

random beam

service beam

ground UE

Fig. 2

determining, by a UE, location information, and determining a target sub-region where the UE is located in accordance with the location information — 301

transmitting, by the UE, a preamble to a random beam of a satellite — 302

Fig. 3

Fig. 4

size of sub-region

satellite
coverage
range

Fig. 5

2-region double-color
multiplexing

4-region double-color
multiplexing

4-region quadra-color
multiplexing

Fig. 6

2-region double-color
multiplexing

4-region quadra-color
multiplexing

Fig. 7

| receiving, by a satellite, a preamble from a UE through a random beam | 801 |

↓

| determining, by the satellite, a target sub-region associated with the preamble within a satellite coverage range in accordance with the preamble | 802 |

Fig. 8

a network side divides a single satellite coverage region into a plurality of sub-regions in accordance with a certain rule

↓

the network side maps the sub-region to a preamble in accordance with a predetermined rule (considering spatial division multiplexing)

↓

the network side notifies such information as ephemeris, sub-region division rule or scheme and mapping rule through an MIB or SIB, and transmits the information to a UE

↓

transmits the information to the UE through a downlink random beam

a signal is received through an uplink random beam

↓

a preamble is received through the random beam? — N

↓ Y

the network side searches a corresponding sub-region in accordance with a correspondence between sub-regions and preambles or a mapping scheme

↓

determining validity of the preamble? — N

↓ Y

scheduling a service beam in such a manner to point to the sub-region

Fig. 9

the UE obtains such information as ephemeris, sub-region division and correspondence between preambles and positions

↓

he UE calculates a sub-region where the UE is located relative to a satellite in accordance with location information and ephemeris, and selects a preamble in accordance with the correspondence between the sub-regions and the preambles

↓

the UE transmits the uplink preamble signal through the random beam

↓

the UE detects RAR? — N

↓ Y

waits for the service beam according to the service beam information in the RAR

Fig. 10

```
          ┌─ 1110
  ┌──────────────┐                                        ┌─ 1100
  │  processor   │◄════►┐                                 │
  └──────────────┘      │    ┌──────────────┐    ┌──────────────┐
          ┌─ 1120       │    │              │    │  transceiver │
  ┌──────────────┐      ├════│ bus interface│◄══►│              │
  │   memory     │◄════►┘    │              │    └──────────────┘
  └──────────────┘           └──────────────┘
```

Fig. 11

```
          ┌─ 1210
  ┌──────────────┐                                        ┌─ 1200
  │  processor   │◄════►┐                                 │
  └──────────────┘      │    ┌──────────────┐    ┌──────────────┐
          ┌─ 1220       │    │              │    │  transceiver │
  ┌──────────────┐      ├════│ bus interface│◄══►│              │
  │   memory     │◄════►┘    │              │    └──────────────┘
  └──────────────┘           └──────────────┘
```

Fig. 12

```
              ┌─ 1300
  ┌────────────────────────┐
  │  ┌──────────────────┐  │── 1301
  │  │  determination   │  │
  │  │      unit        │  │
  │  └──────────────────┘  │
  │           │            │
  │  ┌──────────────────┐  │── 1302
  │  │   transmission   │  │
  │  │      unit        │  │
  │  └──────────────────┘  │
  │          UE            │
  └────────────────────────┘
```

Fig. 13

1400

reception unit 1401

determination unit 1402

satellite

Fig. 14

| **INTERNATIONAL SEARCH REPORT** | | International application No. |
|---|---|---|
| | | **PCT/CN2022/123815** |

**A. CLASSIFICATION OF SUBJECT MATTER**

H04W 28/06(2009.01)i

According to International Patent Classification (IPC) or to both national classification and IPC

**B. FIELDS SEARCHED**

Minimum documentation searched (classification system followed by classification symbols)

H04W; H04Q; H04L; H04B

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 前导码, 卫星, 区域, 位置, 子区域, 波束, 随遇波束, 系统信息, MIB, SIB, preamble, satellite, region, location, sub-region, beam, encounter beam, system information.

**C. DOCUMENTS CONSIDERED TO BE RELEVANT**

| Category* | Citation of document, with indication, where appropriate, of the relevant passages | Relevant to claim No. |
|---|---|---|
| X | CN 113315562 A (HUAWEI TECHNOLOGIES CO., LTD.) 27 August 2021 (2021-08-27) claims 1-29 | 1-37 |
| A | CN 112583463 A (HUAWEI TECHNOLOGIES CO., LTD.) 30 March 2021 (2021-03-30) entire document | 1-37 |
| A | CN 112566193 A (HUAWEI TECHNOLOGIES CO., LTD.) 26 March 2021 (2021-03-26) entire document | 1-37 |
| A | US 2020274594 A1 (ATC TECHNOLOGIES, LLC) 27 August 2020 (2020-08-27) entire document | 1-37 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2022** | **25 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/123815**

| Patent document cited in search report | | | Publication date (day/month/year) | Patent family member(s) | | | Publication date (day/month/year) |
|---|---|---|---|---|---|---|---|
| CN | 113315562 | A | 27 August 2021 | WO | 2021169612 | A1 | 02 September 2021 |
| CN | 112583463 | A | 30 March 2021 | WO | 2021063176 | A1 | 08 April 2021 |
| | | | | EP | 4027532 | A1 | 13 July 2022 |
| | | | | US | 2022225432 | A1 | 14 July 2022 |
| CN | 112566193 | A | 26 March 2021 | WO | 2021057924 | A1 | 01 April 2021 |
| | | | | US | 2022217591 | A1 | 07 July 2022 |
| | | | | EP | 4030823 | A1 | 20 July 2022 |
| US | 2020274594 | A1 | 27 August 2020 | CA | 3127655 | A1 | 27 August 2020 |
| | | | | WO | 2020172408 | A1 | 27 August 2020 |
| | | | | US | 2021273703 | A1 | 02 September 2021 |
| | | | | EP | 3881450 | A1 | 22 September 2021 |

Form PCT/ISA/210 (patent family annex) (January 2015)

**REFERENCES CITED IN THE DESCRIPTION**

**Patent documents cited in the description**

- CN 202111270181